**Europäisches Patentamt**

**European Patent Office**

**Office européen des brevets**

(19)

(11) Veröffentlichungsnummer : **0 361 031 B1**

(12) **EUROPÄISCHE PATENTSCHRIFT**

(45) Veröffentlichungstag der Patentschrift :
**20.05.92 Patentblatt 92/21**

(51) Int. Cl.⁵ : **B23B 27/16**

(21) Anmeldenummer : **89114444.6**

(22) Anmeldetag : **04.08.89**

(54) **Messerplatte für die Präzisionsbearbeitung insbesondere von Bohrungen.**

(30) Priorität : **24.09.88 DE 3832547**

(43) Veröffentlichungstag der Anmeldung :
**04.04.90 Patentblatt 90/14**

(45) Bekanntmachung des Hinweises auf die
Patenterteilung :
**20.05.92 Patentblatt 92/21**

(84) Benannte Vertragsstaaten :
**AT BE CH DE ES FR GB IT LI NL SE**

(56) Entgegenhaltungen :
**DE-A- 2 258 448**
**DE-A- 2 405 234**
**DE-A- 2 407 378**
**DE-A- 2 615 589**

(73) Patentinhaber : **MAPAL Fabrik für
Präzisionswerkzeuge Dr. Kress KG
Obere Bahnstrasse 13 Postfach 1520
W-7080 Aalen (DE)**

(72) Erfinder : **Die Erfinder haben auf ihre Nennung
verzichtet**

(74) Vertreter : **Gleiss, Alf-Olav, Dipl.-Ing. et al
Patentanwalt Silberburg Strasse 187
W-7000 Stuttgart 1 (DE)**

Jouve, 18, rue Saint-Denis, 75001 PARIS

## Beschreibung

Die Erfindung betrifft eine Messerplatte für die Präzisionsbearbeitung insbesondere von Bohrungen, die als symmetrisches Vieleck mit mindestens vier Ecken ausgebildet ist und mindestens eine Haupt- und eine Nebenschneide sowie eine von den Spanablaufflächen der Schneiden ausgehende Erhebung aufweist, deren Flanken als Spanleitstufen dienen. Außerdem betrifft die Erfindung ein Verfahren zur Herstellung einer derartigen Messerplatte.

Die Präzisionsbearbeitung von Werkstücken, insbesondere von Bohrungswänden durch spanende Verfahren gewinnt stetig an Bedeutung, weil dadurch die Nachfolgebearbeitung durch Honen und/oder durch andere zusätzliche Verfahren eingespart werden kann. Besonders wichtig bei der Präzisions- oder Feinbearbeitung von Werkstücken ist der richtige Spanfluß und der daraus resultierende Spanbruch. Nur dadurch kann bei der Präzisionsbearbeitung von Bohrungen sichergestellt werden, daß nicht zu lange Späne entstehen, die zu einem Spanstau führen, durch den die Qualität der bearbeiteten Oberfläche beeinträchtigt wird. Ein wesentlicher Nachteil bekannter Messerplatten ist auch, daß deren Herstellung sehr aufwendig ist.

Eine Messerplatte der eingangs genannten Art geht bereits aus Figur 15 der deutschen Offenlegungsschrift DE-OS 26 15 589 hervor. Insgesamt sind dort vier Schneidenecken vorgesehen, wobei sich an jede Schneidenecke eine Spanfläche anschließt, die von zwei sich schneidenden Flächenelementen bebildet ist, welche in der krümmungshalbierenden Ebene der Schneidenecke an einem Krümmungsbogen zusammenstoßen. Dies geht insbesondere aus der Figur 26 hervor. Die Erstellung einer derartig ausgebildeten Messerplatte ist äußerst kompliziert sowie zeitaufwendig und daher kostspielig. Insbesondere können nur Spezialbearbeitungswerkzeuge eingesetzt werden, die während des Herstellungsvorgangs mehrfach auszuwechseln sind, überdies ist mehrfach ein Umspannvorgang der zu fertigenden Messerplatte erforderlich. Es ist auch möglich, die Messerplatte in einem Sinterverfahren herzustellen. Doch sind die dabei entsehenden Kantenradien für die Präzisionsbearbeitung bzw. Feinbearbeitung ungeeignet.

Es ist daher Aufgabe der Erfindung, eine einfach und damit preiswert herstellbare Messerplatte für die Präzisionsbearbeitung von Oberflächen, insbesondere von Bohrungen zu schaffen, mit der optimale Oberflächenqualitäten erzielbar sind, so daß Nachfolgebearbeitungen entfallen können.

Diese Aufgabe wird bei einer Schneidplatte der eingangs genannten Art mit Hilfe der in Anspruch 1 genannten Merkmale gelöst. Bei dieser Messerplatte ist die zwischen Schneidkante und Spanleitstufe liegende Spanablauffläche in Richtung ihrer Längsausdehnung unter einem Winkel $\beta$ geneigt. Durch die sich ändernde Höhe der Spanleitstufe ergibt sich ein besonders guter Spanfluß, wobei die einlaufenden Späne auch optimal gebrochen werden. Dadurch wird ein Spanstau durch zu lange oder durch gestauchte Späne sicher vermieden, so daß eine Beschädigung der herzustellenden Oberfläche durch gestaute Späne praktisch ausge schlossen ist. Die Messerplatte kann einfach und preiswert durch Schleifen hergestellt werden. Durch die Neigung der Spanablauffläche wird vermieden, daß die Schneidkanten beim Schleifen der Spanablaufflächen beschädigt werden. Die form der Messerplatte ist so einfach, daß mehrere verschiedene Messerplatten leicht und kostengünstig für verschiedene Verwendungszwecke herstellbar sind.

Ein bevorzugtes Ausführungsbeispiel zeichnet sich dadurch aus, daß sowohl die Messerplatte als auch die auf der Messerplatte vorgesehene Erhebung, deren flanken als Spanleitstufen dienen, als symmetrisches, gleichseitiges Sechseck ausgebildet ist. Eine derartige Messerplatte ist besonders sicher in einer der Halterung der Messerplatte dienenden Spannpratze befestigbar, die vorzugsweise als schwenkbare Kassette ausgebildet ist. Insbesondere die symmetrische, sechseckige form der Messerplatte garantiert eine stabile Lagerung in der Spannpratze.

Bevorzugt wird ein Ausführungsbeispiel, bei dem alle Außenkanten der Messerplatte als Schneidkanten ausgebildet sind, so daß die Messerplatte als Wendeplatte verwendbar ist. Je nach Befestigung der Messerplatte in einem entsprechenden Werkzeug dienen alle Außenkanten sowohl als Haupt- als auch als Nebenschneide. Dies führt zu einer besonders guten Ausnutzung der Messerplatte, das heißt zu sehr hoher Wirtschaftlichkeit.

Ein weiteres bevorzugtes Ausführungsbeispiel zeichnet sich dadurch aus, daß die Spanabflußfläche von der Schneidkante zur Spanleitstufe unter einem Winkel $\tau$ hin abfällt. Dadurch wird das Spanablauf- und -bruchverhalten günstig beeinflußt.

Außerdem ist es Aufgabe der Erfindung ein Verfahren zu schaffen, mit dem eine Messerplatte der eingangs genannten Art einfach und preiswert herstellbar ist.

Diese Aufgabe wird auch gelöst durch ein Verfahren zur Herstellung eine Messerplatte für die Präzisionsbearbeitung gemäß Anspruch 12.

Besonders vorteilhaft ist es, daß eine relativ große und damit unempfindliche Schleifscheibe bei der Herstellung der Messerplatte verwendet werden kann. Die geradlinige Bewegung der Schleifscheibe gegenüber der Messerplatte ist auch sehr einfach, das heißt der Bewegungsablauf ist leicht reproduzierbar. Dadurch ist die Messerplatte auch in einem automatischen Verfahren herstellbar.

Weitere Vorteile und Weiterbildungen der Messerplatte ergeben sich aus den Unteransprüchen.

Die Erfindung wird im folgenden anhand der ein Ausführungsbeispiel wiedergegebenen Zeichnung näher erläutert. Es zeigen:

Figur 1 eine Draufsicht auf die Vorderseite einer Messerplatte;

Figur 2 eine Seitenansicht einer Messerplatte gemäß Figur 1;

Figur 3 eine Messerplate im Eingriff mit einer zu bearbeitenden Oberfläche;

Figur 4 eine perspektivische Darstellung einer Messerplatte;

Figur 5 einen Schnitt durch ein die Messerplatte haltendes Werkzeug und

Figur 6 einen Ausschnitt eines Werkzeugs mit einer eingesetzten Messerplatte.

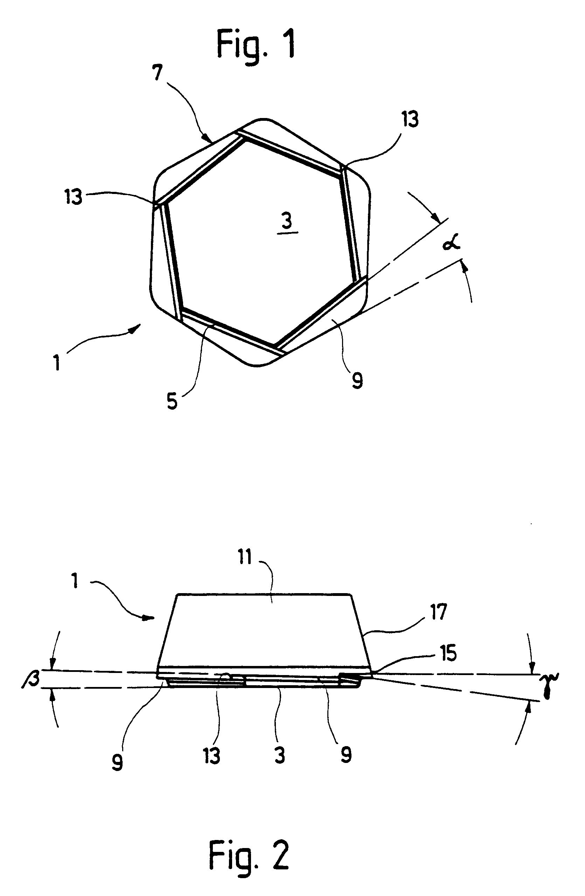

In Figur 1 ist beispielhaft eine Messerplatte in Form eines gleichseitigen Sechsecks dargestellt. Grundsätzlich eignen sich jedoch auch andere z.B. vier-, fünf- oder achteckig ausgebildete Messerplatten.

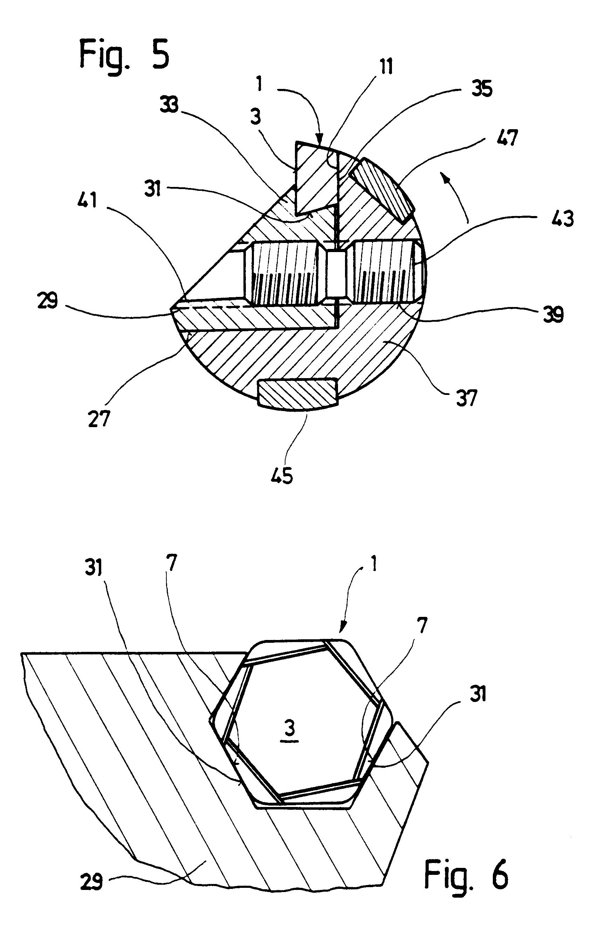

Auf der Vorderseite der Messerplatte 1 ist eine Erhebung 3 vorgesehen, die als Messerbrust dient, also als Anlagefläche einer der Befestigung der Messerplatte in einem Werkzeug dienenden Spannpratze (vergleiche Figur 5).

Die Erhebung 3 ist ebenfalls als gleichseitiges, symmetrisches Sechseck ausgebildet. Die als Spanleitstufen 5 dienenden Flanken der Erhebung 3 verlaufen hier allerdings nicht parallel zu den Seitenkanten 7 der Messerplatte. Hier ist die Erhebung um einem Winkel $\alpha$ gegenüber dem Grundkörper der Messerplatte gedreht. Der Winkel $\alpha$ kann in einem Bereich von $0° \leq \alpha \leq 20°$ liegen. Als besonders günstig hat sich jedoch ein Wert von $\alpha = 10°$ herausgestellt.

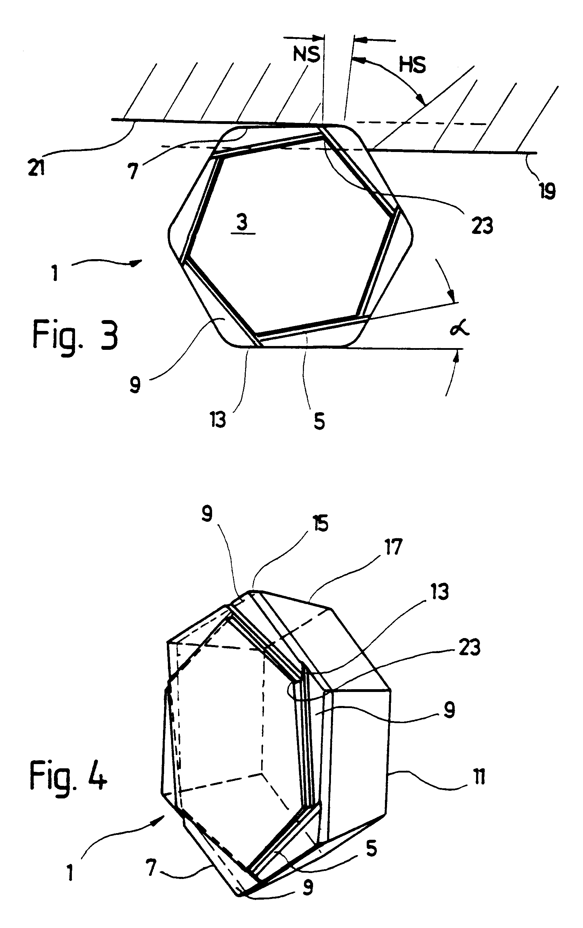

Aus der Darstellung in Figur 1 ist ersichtlich, daß die Außenabmessungen der Erhebung 3 kleiner sind als die Außenabmessungen der Messerplatte 1. Die Endpunkte bzw. Ecken (siehe Ecke 23 in Figur 3) der Erhebung 3 liegen daher in einem Abstand zu den Seitenkanten 7 der Messerplatte 1. Es hat sich als besonders vorteilhaft herausgestellt, wenn die Erhebung 3 um 5% bis 25%, vorzugsweise um 10% bis 15% kleiner ist als die Messerplatte.

Die Seitenkanten 7 der Messerplatte 1 bilden die Schneidkanten der Messerplatte. Es ist deutlich ersichtlich, daß die Seitenkanten nicht unter einem Winkel ineinander übergeben und eine Kante bilden, sondern daß in den Übergangsbereichen ein Radius vorgesehen ist.

Figur 1 zeigt, daß zwischen den Seitenkanten 7 und den Spanleitstufen 5 Spanablaufflächen 9 liegen. Aus Figur 2 ist ersichtlich, daß die Spanablaufflächen nicht parallel zu der Oberfläche der Erhebung 3 bzw. zur Rückseite 11 der Messerplatte 1 verlaufen. Sie sind -in Richtung ihre Längsausdehnung gesehen- unter einem Winkel $\beta$ geneigt, der im Bereich zwischen $0° \leq \beta \leq 5°$ liegt und vorzugsweise den Wert 1,5° annimmt. Der Winkel $\beta$ wird auch als Verzerr- oder Korrekturwinkel bezeichnet.

Bei dem in der Figur dargestellten Ausführungsbeispiel verbreitert sich die Spanablauffläche jeweils im Gegenuhrzeigersinn. Der schmalste Bereich der Spanablauffläche ist der höchste. Die Spanablauffläche fällt also im Gegenuhrzeigersinn ab. Dadurch, daß der breiteste Teil einer Spanablauffläche deren tiefster Bereich ist, entsteht zur im Gegenuhrzeigersinn benachbarten Spanablauffläche eine kleine Stufe 13.

In Figur 1 ist durch Doppelstriche angedeutet, daß hier am Übergang zwischen der Spanablauffläche 9 und der Flanke 5 bzw. der Stufe 13 ein Radius eingeschliffen ist.

Die Spanablaufflächen 9 sind nicht nur in ihrer Längsrichtung im Winkel $\beta$ geneigt und fallen im Gegenuhrzeigersinn ab, es besteht auch ein Gefälle quer zur Längsausdehnung, also von den Seitenkanten 7 zu den als Spanleitstufen 5 dienenden Flanken der Erhebung 3. Das Gefälle weist einen Winkel $\tau$ von $0° \leq \tau \leq 15°$ auf. Vorzugsweise wird ein Winkel von 3° bis 6° gewählt. Der winkel $\tau$ wird auch als Spanwinkel bezeichnet.

Aus der Seitenansicht gemäß Figur 2 ist ersichtlich, daß die Seitenwand der Messerplatte ausgehend von der Seitenkante 7 abfällt. Es ist hier ein Winkel von 7° gewählt. Dieser Bereich bildet die Freifläche 15 der als Schneidkanten dienenden Seitenkanten der Messerplatte 1. An die Freifläche 15 schließt sich ein Bereich 17 an, der gegenüber der Horizontalen beispielsweise um 15° geneigt ist. Der Bereich 17 ist also stärker geneigt als die Freifläche 15.

Figur 3 zeigt eine Messerplatte gemäß Figur 1 im Eingriff mit einer Oberfläche, beispielsweise mit einer Bohrungswand 19. Gleiche Teile sind mit gleichen Bezugszeichen versehen, so daß auf deren Beschreibung hier verzichtet werden kann.

Bei der Bearbeitung der Bohrungswand 19 mit Hilfe der Messerplatte 1 wird diese in einem hier nicht dargestellten Werkzeug auf geeignete Weise festgespannt. Das Werkzeug bewegt sich parallel zur Oberfläche der Bohrungswand 19, in Figur 3 von links nach rechts. Dabei wird die Messerplatte 1 gemeinsam mit dem Werkzeug in Rotation versetzt, so daß sie sich in Figur 3 auf den Betrachter zu bewegt, also aus der Bildebene heraus.

In Figur 3 ist das von der Messerplatte 1 abgetragene Material der Bohrungswand 19, die Schnittiefe, gestrichelt dargestellt. Der in Vorschubrichtung abfallende bzw. geneigte Bereich der Seitenkante 7 der Messerplatte 1 dient bei der Bearbeitung der Oberfläche bzw. der Bohrungswand 19 als Hauptschneide HS. Der sich daran im Gegenuhrzeigersinn, also in Figur 3 links anschließende Bereich der Seitenkante 7 dient als Nebenschneide NS. Die Seitenkante 7 der Messerplatte 1 ist hier so geneigt, daß sie praktisch parallel zur bearbeitenden Bohrungswand verläuft. Die Neigung ish hier übertrieben dargestellt. Die Nebenschneide fällt um 50 bis 100 µm bezogen auf Ihre Gesamtlänge ab. Durch diese Neigung ist sichergestellt, daß die Stufe 13 nicht mit der bearbeiteten Bohrungswand 21 in Berührung kommt und deren Oberflächenqualität mindert.

Aus Figur 3 ist ersichtlich, daß durch eine Änderung des Winkels α die Breite der Spanablauffläche 9 im Bereich der Hauptschneide HS und der Nebenschneide NS variiert werden kann. Je nach Material der zu bearbeitenden Oberfläche kann die Breite der Spanablauffläche 9 bei der Herstellung einer Messerplatte eingestellt werden. Dabei ist darauf zu achten, daß die Breite nicht zu klein gewählt wird, damit keine Spanstauchungen entstehen. Wenn andererseits die Breite zu groß eingestellt wird, bricht der Span nicht mehr, so daß lange durchgehende Späne bzw. Spiralen entstehen. Sowohl durch Spanstauchungen als auch durch zu lange Späne kann ein Spanstau entstehen. Dadurch können Späne die bearbeitete Oberfläche 21 der Bohrungswand 19 beschädigen.

Die Außenabmessungen der Erhebung 3 müssen so gewählt werden, daß die im Bereich der die Bohrungswand 19 bearbeitenden Hauptschneide HS bzw. Nebenschneide NS liegende Ecke 23 der Erhebung 3 vorzugsweise im Bereich der gestrichelten dargestellten Schnittiefe liegt. Dadurch ergibt sich ein optimales Spanablaufverhalten.

Wenn die Spanablauffläche 9 -wie hier dargestellt- eben ausgebildet ist, ist das Spanablaufverhalten ausschließlich vom Abstand der Seitenkante 7 zur als Spanleitstufe 5 dienenden Flanke der Erhebung 3 abhängig. Dadurch läßt sich das Spanablaufverhalten besonders einfach voraussagen.

Aus Figur 3 ist ohne weiteres ersichtlich, daß die Messerplatte 1 lediglich um 60° gedreht zu werden braucht, wenn die mit der Bohrungswand 19 in Eingriff stehende Haupt- und/oder Nebenschneide abgenutzt ist. Dadurch, daß die Geometrie an allen Kanten der Messerplatte gleich ist, findet eine optimale Ausnutzung der Schneiden statt.

In Figur 4 ist eine perspektivische Ansicht der Messerplatte gemäß den Figuren 1 bis 3 von schräg vorne gezeigt.

Aus dieser Darstellung sind die geometrischen Verhältnisse der Spanleitstufen 5 und der Spanablaufflächen 9 besonders gut ersichtlich.

Vor der Herstellung der Spannablaufflächen erstreckt sich die Erhebung 3 über die gesamte Oberfläche der Messerplatte 1. Die Spannablaufflächen 9 werden mittels einer Schleifscheibe abgetragen. Da die Spanleitstufen geradlinig verlaufen, wird auch die Schleifscheibe geradlinig entlang der Messerplatte bewegt. Daraus ist ersichtlich, daß die Herstellung der Messerplatte relativ einfach und auch in einem automatischen Verfahren möglich ist. Durch die einfach Geometrie ist es möglich, mit relativ großen Schleifscheiben, die relativ unempfindlich sind, die Spanablaufflächen 9 herauszuarbeiten.

Die Herstellung der Messerplatte mit Hilfe des Schleifverfahrens ist sehr einfach und damit preiswert. Vorteil dieses Herstellungsverfahrens ist es überdies, daß sehr kleine Schneidkantenradien etwa im Bereich von 5 µm herstellt werden können.

Aus Figur 4 ist ersichtlich, daß die Spanablaufflächen 9 in ihrer Längsrichtung leicht geneigt sind. Dadurch entsteht an den Seitenkanten 7 im Bereich des Übergangs einer Spanablauffläche in die andere eine Stufe 13. Anhand von Figur 3 wurde erläutert, daß die Seitenkante 7 einer Messerplatte 1 bei der Bearbeitung einer Oberfläche, beispielsweise der Bohrungswandung 19 so geneigt wird, daß die Stufe 13 die bearbeitete Oberfläche 21 nicht berührt.

Die einen Radius aufweisenden Übergangsbereiche zwischen den Spanablaufflächen 9 und den Spanleitstufen 5 der Erhebung 3 sind mit Doppellinien verdeutlicht. Die Spanablauffläche 9 schließt mit der Spanleitstufe 5 einen Winkel von vorzugsweise etwa 90° ein.

Die Befestigung einer Messerplatte gemäß den Figuren 1 bis 4 wird anhand von Figur 5 näher erläutert. Dort ist ein Querschnitt durch ein Werkzeug dargestellt, in dem die Messerplatte 1 festgespannt ist. Das Werkzeug weist einen Körper 37 mit im wesentlichen kreisrunden Querschnitt auf. In den Körper ist eine Ausnehmung 27 eingebracht, in die eine Spannpratze 29 eingesetzt ist. Die Spannpratze ist ihrerseits mit einer Ausnehmung 31 versehen, deren Konturen der Außenform der Messerplatte 1 angepaßt sind. Dies wird anhand von Figur 6 dargestellt. In die Ausnehmung 31 ist die Messerplatte 1 eingesetzt, wobei ein Vorsprung bzw. die Spannlippe 33 der Spannpratze 29 auf die Oberfläche der Erhebung 3, die als Messerbrust dient, drückt. Die Rückseite 11 der Messerplatte wird dabei gegen eine Schulter 35 des Werkzeugkörpers 37 gedrückt.

Der Werkzeugkörper 37 ist mit einer Bohrung 39 versehen, die ein Innengewinde aufweist. Mit dieser Bohrung fluchtet eine Bohrung 41 in der Spannpratze 29, die ihrerseits mit einem Innengewinde versehen ist. In die Bohrungen 39 und 41 ist eine Spannschraube 43 eingesetzt, mit der die Spannpratze 29 auf bekannte Weise mit dem Messerkopf so verspannt wird, daß damit die Messerplatte 1 in der Ausnehmung 31 festgespannt wird.

Aus dem skizzierten Querschnitt in Figur 5 ist auch ersichtlich, daß am Umfang des Werkzeugs gegenüber der Messerplatte 1 eine erste Führungsleiste 45 vorgesehen ist. Eine zweite Führungsleiste 47 ist, in Drehrichtung gesehen, der Messerplatte etwas nachgeordnet. Die Führungsleisten sind in entsprechende, in den Messerkörper 37 eingebrachte Nuten eingesetzt.

Bei der hier gewählten Darstellung liegt die Messerplatte 1 beispielhaft in einer die Längsachse des Werkzeugs schneidenden Ebene. Sie kann jedoch auch so verschwenkt im Werkzeug verspannt werden, daß sie lediglich mit ihrer aktiven Schneidkante in einer Ebene liegt, die die Längs- bzw. Mittelachse des Werkzeugs schneidet.

Da die Messerplatte 1 als Wendeplatte ausgebildet ist, muß die Ausnehmung 31 in der Spannpratze 29 so ausgeformt sein, daß die an der Spannpratze bzw. an den Wänden der Ausnehmung 31 anliegenden Schneiden nicht beschädigt werden.

Bei der Bearbeitung einer Oberfläche bzw. Bohrungswandung gemäß Figur 3 dreht sich das Werkzeug in Richtung des eingezeichneten Pfeils, bei der Ansicht in Figur 5 also im Gegenuhrzeigersinn. Dabei bewegt sich das Werkzeug aus der Bildfläche auf den Betrachter zu.

In Figur 6 ist eine Draufsicht auf eine in eine Spannpratze eingesetzte Messerplatte 1 dargestellt. Zum besseren Verständnis ist die Spannlippe 33 hier weggelassen. Die Form der Ausnehmung 31 in der Spannpratze 29 ist an die äußere Form der Messerplatte 1 angepaßt. die Ausnehmung weist unter anderem zwei sich konisch nach innen in Richtung auf den Boden der Ausnehmung 31 in der Spannpratze 25 öffnende Seitenwände auf. Der Boden verläuft im wesentlichen parallel zur Außenfläche des Werkzeugs. Die Abmessungen der Ausnehmung 31 sind so gewählt, daß zwei Seitenkanten 7 der Messerplatte 1 an den konisch verlaufenden Seitenwänden der Ausnehmung 31 fest anliegen. Zum Ausgleich von Maßtoleranzen liegt die Messerplatte nicht am Boden der Ausnehmung 31 an, sondern nur an den an den Boden angrenzenden schräg auf diesen zu laufenden Seitenwänden. Dadurch findet die Messerplatte 1 einen sicheren Halt in der Spannpratze 29 des Werkzeugs.

## Patentansprüche

1. Messerplatte für die Präzisionsbearbeitung, insbesondere von Bohrungen, die als symmetrisches Vieleck mit mindestens vier Ecken ausgebildet ist und mindestens eine Haupt- und eine Nebenschneide sowie eine von den Spanablaufflächen der Schneiden ausgehende Erhebung aufweist, deren Flanken als Spanleitstufen dienen und deren äußere Begrenzungslinien ein symmetrisches Vieleck umschreiben, dessen Form der der Messerplatte entspricht, wobei die Erhebung gegenüber der Messerplatte um einen Winkel $\alpha$ verdreht ist und kleinere Abmessungen als diese aufweist, so daß, ausgehend von den Eckbereichen des Vielecks, die Breite der Spanablaufflächen abnimmt, **dadurch gekennzeichnet,** daß jede Spanablauffläche (9) eben ausgebildet ist und in Richtung ihrer Längsausdehnung unter einem winkel ($\beta$) derart geneigt verläuft, daß der schmalste Bereich am höchsten liegt und oberhalb der benachbarten Spanablauffläche (9) angeordnet ist.

2. Messerplatte nach Anspruch 1, **dadurch gekennzeichnet,** daß sie, ebenso wie die Erhebung (3), als gleichseitiges Sechseck ausgebildet ist.

3. Messerplatte nach Anspruch 1 oder 2, **dadurch gekennzeichnet,** daß alle Seitenkanten (7) der Messerplatte (1) als Schneidkanten (NS,HS), ausgebildet sind, so daß die Messerplatte als Wendeplatte verwendbar ist, wobei die Zahl der Ecken der Messerplatte der Zahl der Schneiden entspricht.

4. Messerplatte nach einem der Ansprüche 1 bis 3, **dadurch gekennzeichnet,** daß die zwischen den Seitenkanten (7) und den Spanleitstufen (5) liegenden Spanablaufflächen (9) quer zu ihrer Längsausdehnung unter einem Winkel $\tau$ geneigt sind.

5. Messerplatte nach Anspruch 1, **dadurch gekennzeichnet,** daß der Winkel $\alpha$ im Bereich $0° \leq \alpha \leq 20°$ liegt und vorzugsweise den Wert $\alpha = 10°$ annimmt.

6. Messerplatte nach Anspruch 1, **dadurch gekennzeichnet,** daß der Winkel $\beta$ im Bereich $0° \leq \beta \leq 5°$ leigt und vorzugsweise den Wert $\beta = 1,5°$ annimmt.

7. Messerplatte nach Anspruch 4, **dadurch gekennzeichnet,** daß der Winkel $\tau$ im Bereich $0° \leq \tau \leq 15°$, vorzugsweise im Bereich zwischen $3°$ und $6°$ liegt.

8. Messerplatte nach Anspruch 1 oder 2, **dadurch gekennzeichnet,** daß die den Seitenkanten (7) der Messerplatte (1) entsprechenden Hauptschneiden (HS) und Nebenschneiden (NS) unter einem Radius ineinander übergehen.

9. Messerplatte nach einem der Ansprüche 1 bis 8, **dadurch gekennzeichnet,** daß am Übergang zwischen den Spanablaufflächen (9) und den spanleitstufen (5) ein Radius vorgesehen ist.

10. Messerplatte nach Anspruch 1, **dadurch gekennzeichnet,** daß die Außenabmessungen der Erhebung (3) um 5% bis 25%, vorzugsweise um 10% bis 15% kleiner sind als die der Messerplatte (1).

11. Messerplatte nach Anspruch 1, **dadurch gekennzeichnet,** daß die Spanablaufflächen (9) durch Abschleifen der Erhebung (3) hergestellt sind.

12. Verfahren zur Herstellung einer Messerplatte für die Präzisionsbearbeitung insbesondere von Bohrungen, die als symmetrisches Vieleck ausgebildet ist und mindestens eine Haupt- und eine Nebenschneide sowie eine von den Spanablaufflächen der Schneiden ausgehende Erhebung aufweist, deren Flanken als spanleitstufen dienen und deren äußere Begrenzungslinien ein symmetrisches Vieleck umschreiben, dessen Form der der Messerplatte entspricht, wobei die Erhebung gegenüber der Messerplatte um einen Winkel α verdreht ist und kleinere Abmessungen als diese aufweist, so daß, ausgehend von den Eckbereichen des Vielecks, die Breite der Spanablaufflächen abnimmt, **dadurch gekennzeichnet,** daß jede der Spanablaufflächen (9) durch einen Schleifvorgang aus der Erhebung (3) herausgeschliffen wird, wobei die Schleifscheibe geradlinig sowie in Richtung der Längsausdehnung der entsprechenden Spanablauffläche (9) entlang einer unter einem Winkel (β) geneigten Ebene über die Messerplatte (1) bewegt wird, so daß der schmalste Bereich der Spanablauffläche (9) am höchsten liegt und oberhalb der benachbarten Spanablauffläche (9) angeordnet ist.


## Claims

1. Cutting insert for precision processing, in particular of bores, arranged as a symmetrical polygon of at least four corners and having at least one main cutting bit and one secondary cutting bit as well as an elevation extending from the chip-removal surfaces of the cutting bits, the flanks of which serve as chip-guiding stages, and the outer defining lines of which circumscribe a symmetrical polygon, the form of which corresponds with that of the cutting insert, in which respect the elevation is rotated at an angle α relative to the cutting insert and has smaller dimensions than the latter, so that the width of the chip-removal surfaces reduces from the corner regions of the polygonal, **characterised in that** each chip-removal surface (9) is even and extends in the direction of its longitudinal extent at an angle (β) in such a manner that the smallest region is the highest and arranged above the adjacent chip-removal surface (9).

2. Cutting insert according to claim 1, **characterised in that** it is arranged, like the elevation (3), to be an equilateral hexagon.

3. Cutting insert according to claim 1 or 2, **characterised in that** all lateral edges (7) of the cutting insert (1) are cutting edges (NS, HS), so that the cutting insert can be used as a turning plate, in which respect the number of corners of the cutting insert corresponds with the number of cutters.

4. Cutting insert according to one of claims 1 to 3, **characterised in that** chip-removal surfaces (9) located between the lateral edges (7) and the chip-guiding stages (5) are slanted at an angle τ transversely to their longitudinal extent.

5. Cutting insert according to claim 1, **characterised in that** the angle α is in the region of 0° ≤ α ≤ 20°, preferably at the value of α = 10°.

6. Cutting insert according to claim 1, **characterised in that** the angle β is in the region of 0° ≤ β ≤ 5°, preferably at the value of β = 1.5°.

7. Cutting insert according to claim 4, **characterised in that** the angle τ is the in region of 0° ≤ τ ≤ 15°, preferably in the region between 3° and 6°.

8. Cutting insert according to claim 1 or 2, **characterised in that** the main cutters (HS) and secondary cutters (NS) corresponding with the lateral edges (7) merge at a radius.

9. Cutting insert according to one of claims 1 to 8, **characterised in that** a radius is provided at the transition between the chip-removing surfaces (9) and the chip-guiding stages (5).

10. Cutting insert according to claim 1, **characterised in that** the outside dimensions of the elevation (3) are between 5% and 25% smaller than the cutting insert (1), preferably between 10% and 15%.

11. Cutting insert according to claim 1, **characterised in that** the chip-removal surfaces (9) are produced by grinding down the elevation (3).

12. Process for the manufacture of a cutting insert for precision processing, in particular of bores, which is arranged as a symmetrical polygon, having at least one main and one secondary cutter as well as an elevation extending from the chip-removel surfaces of the cutters, the flanks of which serve as chip-guiding stages, and the outer defining lines circumscribe a symmetrical polygon, the form of which corresponds with the cutting insert, in which respect the elevation is rotated at an angle α relative to the cutting insert and has smaller dimensions than the latter, so that the width of the chip-removal surfaces reduces from the corner region of the polygon, **characterised in that** each of the chip-removal surfaces (9) is ground out of the elevation (3) by a grinding process, whereby the grinding disc is moved in a straight line as well as in the direction of the longitudinal extent of the respective chip-removal surface (9) along a plane slanted at an angle (β) over the cutting insert (1), so

EP 0 361 031 B1

that the narrowest region of the chip-removal surface (9) is the highest and arranged above the adjacent chip-removal surface (9).

## Revendications

1. Plaquette de coupe pour l'usinage de précision, en particulier de forages, constituée sous forme de polygone symétrique avec au moins quatre sommets et au moins un tranchant principal et un tranchant secondaire ainsi qu'une élévation qui part des surfaces de dégagement des copeaux, des tranchants, dont les flancs servent de gradins de guidage de copeaux et dont les autres lignes extérieures de délimitation inscrivent un polygone symétrique, dont la forme correspond à celle de la plaquette de coupe, l'élévation étant décalée d'un angle $\alpha$ par rapport à la plaquette de mesure et présente des dimensions plus petites qu'elle de sorte qu'en partant des sommets du polygone la largeur des surfaces de dégagement des copeaux diminue, plaquette caractérisée en ce que chaque surface de dégagement de copeaux (9) a la même conformation et est inclinée d'un angle $\beta$ en direction de son extension longitudinale de telle sorte que la zone la plus étroite est située la plus haute et se trouve au dessus de la surface de dégagement de copeau contigue (9).

2. Plaquette de coupe selon la revendication 1, caractérisée en ce qu'aussi l'élévation (3) a la forme d'un hexagone régulier.

3. Plaquette de coupe selon la revendication 1 ou 2, caractérisée en ce que tous les bords latéraux (7) de la plaquette de coupe (1) sont constitués en bords de coupe (NS, HS), de sorte que la plaquette de coupe est utilisable comme plaquette rotative, le nombre des sommets de la plaquette de coupe correspond au nombre de couteaux (tranchants).

4. Plaquette de coupe selon l'une des revendications 1 à 3, caractérisée en ce que les surfaces de dégagement (9) se trouvant entre les bords latéraux (7) et les gradins (5) de guidage des copeaux sont inclinées d'un angle $\tau$ transversalement à leur extension longitudinale.

5. Plaquette de coupe selon la revendication 1, caractérisée en ce que l'angle $\alpha$ est compris dans l'intervalle $0° \leq \alpha \leq 20°$ et prend de préférence la valeur $\alpha = 10°$.

6. Plaquette de coupe selon la revendication 1, caractérisée en ce que l'angle $\beta$ est compris dans l'intervalle $0° \leq \beta \leq 5°$ et prend de préférence la valeur $\beta = 1,5°$.

7. Plaquette de coupe selon la revendication 4, caractérisée en ce que l'angle $\tau$ est compris dans l'intervalle $0° \leq \tau \leq 15°$ et se trouve de préférence dans l'intervalle compris entre 3° et 6°.

8. Plaquette de coupe selon la revendication 1 ou 2, caractérisée en ce que les tranchants principaux (HS) et les tranchants secondaires (NS) correspondant aux bords latéraux (7) de la plaquette de coupe (1) passent de l'un à l'autre par l'intermédiaire d'un rayon.

9. Plaquette de coupe selon l'une des revendications 1 à 8, caractérisée en ce qu'on prévoit un rayon au passage entre les surfaces de dégagement (9) des copeaux et gradins de guidage (5) de copeau.

10. Plaquette de coupe selon la revendication 1, caractérisée en ce que les dimensions externes de l'élévation (3) sont 5% à 25% de préférence 10% à 15% plus petites que celles de la plaquette de coupe (1).

11. Plaquette de coupe selon la revendication 1, caractérisée en ce qu'on réalise les surfaces de dégagement (9) par meulage de l'élévation (3).

12. Plaquette de coupe pour l'usinage de précision notamment de forages qui est constituée sous forme de polygone symétrique avec au moins un tranchant principal et un tranchant secondaire ainsi qu'une élévation qui part des surfaces de dégagement des copeaux des tranchants, dont les flancs servent de gradins de guidage de copeaux et dont les autres lignes extérieures de délimitation inscrivent un polygone symétrique, dont la forme correspond à celle de la plaquette de coupe, l'élévation étant décalée d'un angle $\alpha$ par rapport à la plaquette de mesure et présente des dimensions plus petites qu'elle de sorte qu'un partant des sommets du polygone la largeur des surfaces de dégagement des copeaux diminue, plaquette caractérisée en ce qu'on taille par meulage chacune des surfaces de dégagement des copeaux (9) dans l'élévation (3), en déplaçant le disque de meulage linéairement ainsi que dans la direction de l'extension longitudinale des surfaces de dégagement (9) correspondantes selon un plan incliné d'un angle ($\beta$) par rapport à la plaquette de coupe (1), de sorte que la zone la plus étroite de la surface de dégagement des copeaux (9) se trouve la plus haute et au-dessus de la surface voisine de dégagement (9) de copeaux.

7

# Fig. 1

# Fig. 2

Fig. 3

Fig. 4

# Fig. 5

# Fig. 6